# EUROPEAN PATENT APPLICATION

(11) **EP 4 507 446 A1**
(43) Date of publication of application: **12.02.2025**
(21) Application number: 23189906.3
(22) Date of filing: 07.08.2023
(51) Int. Cl.: H04W 76/15, H04W 28/082, H04W 28/08

(54) **DUAL STACK APPROACH FOR 6G RADIO PROTOCOLS**

(71) Applicant: Nokia Technologies Oy, 02610 Espoo (FI)
(72) Inventor: SEBIRE, Benoist Pierre, Tokyo, 106-6141 (JP); LI, Zexian, 02610 Espoo (FI)
(74) Representative: Nokia EPO representatives

(57) **Abstract**

Described herein is a User Equipment, UE, comprising at least one processor, and at least one memory storing instructions that, when executed by the at least one processor, cause the LTE at least to: provide a radio protocol stack architecture comprising a first radio protocol stack, a second radio protocol stack parallel to the first radio protocol stack, and a first radio protocol layer configured to feed both the first radio protocol stack and the second radio protocol stack; obtain a radio bearer; configure the first radio protocol layer with the obtained radio bearer; and at the first radio protocol layer: when the obtained radio bearer is a Signaling Radio Bearer, SRB, map the obtained SRB to the first radio protocol stack for processing the obtained SRB; when the obtained radio bearer is a Data Radio Bearer, DRB, associated with a first data rate, map the obtained DRB to the configured second radio protocol stack for processing the obtained DRB; and when the obtained radio bearer is a DRB associated with a second data rate smaller than the first data rate, map the obtained DRB to the configured first radio protocol stack for processing the obtained DRB.

## Description

### TECHNOLOGY

The present disclosure relates to radio protocol design, in particular to 6G radio protocols.

### BACKGROUND

Any discussion of the background art throughout the specification should in no way be considered as an admission that such art is widely known or forms part of common general knowledge in the field.

Ever since the introduction of 2G packet data services (GPRS), it has become a tradition to use as a starting point for the design of the radio protocols of the next generation, the protocol stack of the earlier generation. What was true for 3G and 4G is indeed also true for 5G, as discussed in e.g., Holma H., Toskala, A. and Nakamura, T., 5G Technology: 3GPP New Radio, Wiley, 2019:
- *The LTE radio protocols were primarily designed for the provision of PS services through a flat architecture. They were a major improvement over the previous generations, shedding away the complexity inherent to the support of CS services and to a convoluted architecture. Much of the original principles of LTE remained untouched since Release 8 and have proven to be a solid baseline for over a decade. Thus, in the early days of 5G standardization, it was agreed to use the LTE radio protocols as baseline for 5G and to enhance them for the support of very high data rates with low latency, dynamic spectrum usage and flexible Quality of Service (QoS).*

As result, each generation introduces a new protocol stack which bears some great similarities with the earlier generation(s). If nothing is done, the same path will be followed by 6G.

The initial release of a new generation (e.g. Rel-8 for 4G LTE and Rel-15 for 5G New Radio (NR)) is always designed to accommodate a wide range of services (in terms of requirements), and although each new release expands that range by adding additional mechanisms and optimisations, the same principle remains: one stack handles all kinds of services through configuration (i.e., the toolbox approach), thereby increasing overall complexity.

With dual connectivity, the complexity even doubles with two stacks working in parallel, as discussed in e.g., *www.3gpp.org*/*ftp*/*Specs*/*html-info*/*37340.htm.*

To drive costs down for smaller devices and wearables, simpler versions of the radio protocols have been introduced in LTE (MTC, NB-IoT) and NR (RedCap).

The main issue with the toolbox approach outlined above is that while some optimisations can be considered as acceptable or even desirable for low bit rate services, the very same optimisations may become irrelevant and perhaps even harmful when dealing with high bit rate services. It is not difficult to imagine that while it is perfectly acceptable to run some costly optimisations at low bit rate, running the same optimisations when dealing with Gbps services becomes too expensive in terms of hardware dimensioning and power consumption, especially considering various forms of user equipment in the 6G time. For instance, bit-level optimisations that are important for the coverage of low bit rate services hardly matter for Gbps services and yet, because they belong to the core of the protocol stack, they still have to be executed.

Using the toolbox approach results in a radio protocol stack that is:
A. **Too complex for cheap devices,** which led to the standardisation of MTC and NB-IoT in LTE, and of RedCap in NR.
B. **Too complex to evolve towards very high bit rate** (see for instance the concept of Lean User Plane protocol stack by Mediatek, as discussed in e.g., Mediatek, 6G Vision Whitepaper, Mediatek, 2022, and https://d86o2zu8ugzlg.cloudfront.net/ mediatek-craft/documents/MediaTek-6G-Vision-White-Paper-EN0122.pdf)*.*

Hence, there is a need to solve the identified issues with a new type of user protocol design to enable efficient support of various applications ranging from low bit rate to very high bit rate.

### SUMMARY

In accordance with a first aspect of the present disclosure, there is provided a User Equipment, LTE, comprising:
at least one processor, and
at least one memory storing instructions that, when executed by the at least one processor,
cause the LTE at least to:
   provide a radio protocol stack architecture comprising a first radio protocol stack, a second radio protocol stack parallel to the first radio protocol stack, and a first radio protocol layer configured to feed both the first radio protocol stack and the second radio protocol stack;
   obtain a radio bearer;
   configure the first radio protocol layer with the obtained radio bearer; and at the first radio protocol layer:
      when the obtained radio bearer is a Signaling Radio Bearer, SRB, map the obtained SRB to the first radio protocol stack for processing the obtained SRB;
      when the obtained radio bearer is a Data Radio Bearer, DRB, associated with a first data rate, map the obtained DRB to the configured second radio protocol stack for processing the obtained DRB; and when the obtained radio bearer is a DRB associated with a second data rate smaller than the first data rate, map the obtained DRB to the configured first radio protocol stack for processing the obtained DRB.

In some examples, the obtained radio bearer indicates a corresponding service requiring a data rate to be supported by the UE, and the UE is further caused to, when the obtained radio bearer is a DRB:
map the obtained DRB to the first radio protocol stack when the required data rate is lower than or equal to a data rate threshold; and
configure the second radio protocol stack parallel to the first radio protocol stack when the required data rate is higher than the data rate threshold and map the obtained DRB to the configured second radio protocol stack.

In some examples, the configured second radio protocol stack comprises a pre-determined number of Radio Processing Units, RPUs, configured to process the obtained radio bearer in parallel, and the LTE is further caused to:
adjust the pre-configured number based on the required data rate to be supported by the UE.

In some examples, the LTE is further caused to:
configure the second radio protocol stack parallel to the first radio protocol stack based on capability of the UE.

In some examples:
the first radio protocol stack is configured to host control plane data for both the first radio protocol stack and second radio protocol stack, the control plane data comprising one or more of: information related to Radio Resource Control, RRC, state; configurations related to RRC signaling; and configurations of the first radio protocol stack and the second radio protocol stack, and
the configured second radio protocol stack is configured to host user plane data.

In some examples, the second radio protocol stack is configured with fixed protocol headers.

In some examples, the first radio protocol layer is any one of: Service Data Adaptation Protocol layer, SDAP layer; Packet Data Convergence Protocol layer, PDCP layer; one or more sub-layers of Packet Data Convergence Protocol layer, PDCP layer; Radio Link Control layer, RLC layer; and Medium Access Control layer, MAC layer.

In some examples:
the radio protocol stack architecture further comprises a second radio protocol layer common to both the first radio protocol stack and the second radio protocol stack and different from the first radio protocol layer;
the first radio protocol stack and the configured second radio protocol stack are configured to feed the second radio protocol layer; and
the second radio protocol layer is preferably any one of: Medium Access Control layer, MAC layer; and Physical layer, PHY layer.

In some examples, the first radio protocol stack and the second radio protocol stack are part of the same radio access technology.

In accordance with a second aspect of the present disclosure, there is provided a network node, configured to establish a communication to a User Equipment, LTE, for providing a service to the LTE, the network node comprising:
at least one processor, and
at least one memory storing instructions that, when executed by the at least one processor, cause the network node at least to:
   configure the LTE with a radio protocol stack architecture comprising a first radio protocol stack, a second radio protocol stack to be activated by the LTE and a first radio protocol layer, wherein the first radio protocol stack and the second radio protocol stack are parallel to each other and the first radio protocol layer is configured to feed both the first radio protocol stack and the second radio protocol stack; and
   configure the UE to, when obtaining a radio bearer related to the provided service at the first radio protocol layer:
      when the obtained radio bearer is a Signaling Radio Bearer, SRB, map the SRB to the first radio protocol stack;
      when the obtained radio bearer is a Data Radio Bearer, DRB, with a first data rate, activate the second radio protocol stack at the UE and map the DRB to the activated second radio protocol stack; and
      when the obtained radio bearer is a DRB associated with a second data rate smaller than the first data rate, map the obtained DRB to the configured first radio protocol stack for processing the obtained DRB.

In some examples, the service requires a data rate to be supported by the UE and the network node is further caused to:
determine a data rate threshold based on the UE capability; and
configure the UE to, when the obtained radio bearer is a DRB:
   map the obtained DRB related to the provided service to the first radio protocol stack when the required data rate is lower than or equal to the determined data rate threshold; and
   activate the second radio protocol stack when the required data rate is higher than the determined data rate threshold and map the obtained DRB related to the provided service to the activated second radio protocol stack.

In some examples, the network node is further caused to: configure, for the UE, the second radio protocol stack with a pre-determined number of Radio Processing Units, RPUs, for processing in parallel the obtained radio bear related to the provided service; and
configure the LTE to adjust the pre-configured number based on the required data rate to be supported by the UE.

In some examples, the network node is further caused to:
determine the first protocol layer to be located as being higher than Medium Access Control layer, MAC layer, and preferably as Packet Data Convergence Protocol High, PDCP-HI, layer, more preferably after sequence number, SN, allocation and before functions including security and header compression.

In accordance with a third aspect of the present disclosure, there is provided a communications system, comprising a User Equipment in accordance with any one of the first aspect and its associated examples and a network node in accordance with any one of the second aspect and its associated examples.

In accordance with a fourth aspect of the present disclosure, there is provided a method of a User Equipment, LTE, the method comprising:
providing a radio protocol stack architecture comprising a first radio protocol stack, a second radio protocol stack parallel to the first radio protocol stack, and a first radio protocol layer configured to feed both the first radio protocol stack and the second radio protocol stack;
obtaining a radio bearer;
configuring the first radio protocol layer with the obtained radio bearer; and
at the first radio protocol layer:
   when the obtained radio bearer is a Signaling Radio Bearer, SRB, mapping the obtained SRB to the first radio protocol stack for processing the obtained SRB;
   when the obtained radio bearer is a Data Radio Bearer, DRB, associated with a first data rate, mapping the obtained DRB to the configured second radio protocol stack for processing the obtained DRB; and
   when the obtained radio bearer is a DRB associated with a second data rate smaller than the first data rate, mapping the obtained DRB to the configured first radio protocol stack for processing the obtained DRB.

In accordance with a fifth aspect of the present disclosure, there is provided a method of a network node, configured to establish a communication to a User Equipment, LTE, for providing a service to the LTE, the method comprising:
configuring the LTE with a radio protocol stack architecture comprising a first radio protocol stack, a second radio protocol stack to be activated by the UE and a first radio protocol layer, wherein the first radio protocol stack and the second radio protocol stack are parallel to each other and the first radio protocol layer is configured to feed both the first radio protocol stack and the second radio protocol stack; and
configuring the UE to, when obtaining a radio bearer related to the provided service at the first radio protocol layer:
   when the obtained radio bearer is a Signaling Radio Bearer, SRB, map the SRB to the first radio protocol stack;
   when the obtained radio bearer is a Data Radio Bearer, DRB, with a first data rate, activate the second radio protocol stack at the UE and map the DRB to the activated second radio protocol stack; and
   when the obtained radio bearer is a DRB associated with a second data rate smaller than the first data rate, map the obtained DRB to the configured first radio protocol stack for processing the obtained DRB.

In accordance with a sixth aspect of the present disclosure, there is provided a computer program comprising instructions for causing an apparatus to perform the method according to the fourth aspect, or for causing an apparatus to perform the method according to the fifth aspect.

In accordance with a seventh aspect of the present disclosure, there is provided a memory storing computer readable instructions for causing an apparatus to perform the method according to the fourth aspect, or for causing an apparatus to perform the method according to the fifth aspect.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an example of different LTE types with the two radio protocol stack approach according to an example embodiment of the present disclosure;
Figure 2 schematically illustrates an example of Control Plane Location with the two radio protocol stack approach according to an example embodiment of the present disclosure;
Figure 3 schematically illustrates an example of protocol stack determination at PDCP layer according to an example embodiment of the present disclosure;
Figure 4 schematically illustrates an example of protocol stack determination at SDAP layer according to an example embodiment of the present disclosure; and
Figure 5 schematically illustrates an example of a signalling diagram according to an example embodiment of the present disclosure.

### DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or applicati on capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the LTE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   - The function split in this option is similar to the 1A architecture in DC. RRC is in the central unit. PDCP, RLC, MAC, physical layer and RF are in the distributed unit.
Option 2 (3C-like split):
   - The function split in this option is similar to the 3C architecture in DC. RRC and PDCP are in the central unit. RLC, MAC, physical layer and RF are in the distributed unit.
Option 3 (intra RLC split):
   - Low RLC (partial function of RLC), MAC, physical layer and RF are in the distributed unit. PDCP and high RLC (the other partial function of RLC) are in the central unit.
Option 4 (RLC-MAC split):
   - MAC, physical layer and RF are in the distributed unit. PDCP and RLC are in the central unit.

Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such LTE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A LTE may generate and transmit and receive RRC messages containing one or more RRC PDUs (Packet Data Units).

The LTE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:
- store the AS context;
- transfer unicast data to/from the UE;
- monitor control channels associated with the shared data channel to determine if data is scheduled for the data channel;
- provide channel quality and feedback information;
- perform neighboring cell measurements and measurement reporting.

The RRC protocol includes e.g. the following main functions:
- RRC connection control;
- measurement configuration and reporting;
- establishment/modification/release of measurement configuration (e.g. intra-frequency, inter-frequency and inter-RAT measurements);
- setup and release of measurement gaps;
- measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

As illustrated above, the present disclosure generally seeks to establish the framework for the design of 6G radio protocols.

In particular, for the design of 6G radio protocols, it is suggested a **two radio protocol stacks approach,** including:
- One radio protocol stack designed for low bit rate services, with optimisations to optimise coverage (e.g. bit-level optimisations) and reliability (e.g. RLC ARQ). This radio protocol stack is likely to resemble the 4G stack of Rel-8, or 5G stack of Rel-15, and is referred to as Anchor Protocol Stack or APS.
- One radio protocol stack designed for high bit rate services, where the focus is laid on a processing-friendly and implementation-friendly design (e.g., parallel processing and/or hardware-based processing), leaving aside some optimisations that an implementation can only afford for low bit rates. This radio protocol stack is expected to differ from earlier generations, and is referred to as Fast Protocol Stack or FPS.

In more detail:
- The two radio protocol stacks have distinct layers which are configured separately:
- That is, the FPS and APS cannot be the result of configuring one common stack into two different modes. APS and FPS are expected to differ too much to make this possible without significant increase in complexity (for instance, PDUs are likely to be built according to different principles). At least one protocol layer of one of FPS and APS substantially differs from all protocol layers of the other one of the FPS and APS.
- They are specified as part of the same radio interface.
- They are fed by a common layer (e.g. SDAP or PDCP) and may feed a common layer (e.g. MAC or PHY). The FPS and APS may thus use at least one common protocol layer.
- The FPS hosts several radio processing units (RPUs) which is responsible for processing data packets over different protocol layers within FPS.
- They are configured with one RRC.
- SRB(s) is/are expected to be hosted by the APS only.
- A service (e.g., radio bearer) is expected to be configured to be mapped on either of the two radio protocol stacks, i.e. never both at the same time and moving a service from one radio protocol stack to the other would require an RRC reconfiguration.

For one LTE, the APS is a logical host for the control plane (CP) functions (for example different RRC state and related configurations by RRC signalling) and APS is always configured/activated to handle CP and user plane (UP) functions. On the other hand, the FPS becomes configured/activated depending on the UE capability and the services that need to be supported (e.g. when high bit rate services are configured).

Being applied in the FPS stack, RPUs provide a scalable protocol architecture and more specifically handle the user plane operation. For example, after registration, the network provides the UE with one or more RRC configuration(s) that are stored by the UE. These RRC configuration(s) may include e.g., at least one RPU configuration (which may be used in several RRC states) and optionally configuration of one or more radio bearers and associated configuration of the radio protocols (e.g., RLC mode, SN length...), all of which remain while the UE is registered to the network (i.e., even when UE changes RRC state).

In one example, the UE is configured to receive and store one or more RPU configurations even when a configured radio protocol event occurs, at which time the UE selects one of the one or more stored RPU configurations and sends to the network an indication of which of the RPU configurations is applied. In a related example, the configured radio protocol event is one or more of handover, handover failure, RRC state transitions. radio link failure, or radio connection failure. In a related example, a RPU configuration is a user plane configuration that allows to transmit data to or receive data from the network.

As illustrated in Table 1 below, for services requiring higher throughput, RPU0 switches to a CONNECTED mode with one or more additional RPUs being activated for possible data transmission. In this example, an RPU ready for transmission but not transmitting yet is depicted as being in STANDBY while RPUs actively involved in data transmissions are shown as being in CONNECTED. The higher the maximum bit rate, the higher the of total number of RPUs are configured. The ratio between RPUs being in CONNECTED and RPUs being in STANDBY depends on the proper balance between power saving and latency (an RPU in Standby mode increases power saving but also latency when going to CONNECTED).

**Table 1 An example embodiment of configured RPUs for meeting respective service requirements**

| **Case** | IDLE | SDT | BROWSING | Social Media | XR |
|---|---|---|---|---|---|
| **RPU0** | Idle | Standby | Connected | Connected | Connected |
| **RPU1** | - | - | Standby | Standby | Connected |
| **RPU2** | - | - | | Standby | Connected |
| **RPU3** | - | - | | Standby | Connected |
| **RPU4** | - | - | | | Standby |
| **RPU5** | - | - | | | Standby |
| **RPU6** | - | - | | | Standby |
| **RPU7** | - | - | | | Standby |

References are now made to the figures. In particular, it is to be noted that identical or like reference numbers used in the figures of the present disclosure may, unless indicated otherwise, indicate identical or like elements, such that repeated description thereof may be omitted for reasons of conciseness.

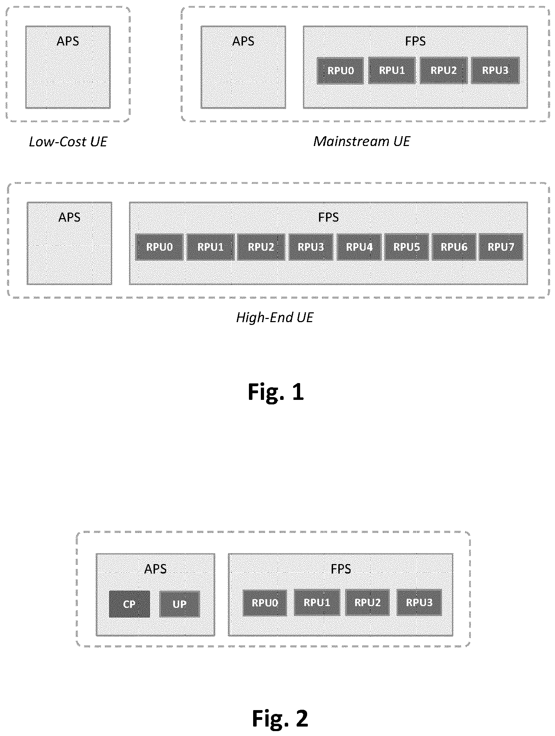

Figure 1 schematically illustrates an example of different LTE types with the two radio protocol stack approach according to an example embodiment of the present disclosure.

With the proposed approach with APS and FPS, different UE types may be introduced for example as shown in Figure 1. A simple device may only implement the first stack (APS), while more complex and capable device would implement both stacks. The higher the bit rates the device needs to support, the larger the number of RPUs the FPS would incorporate as exemplified in Figure 1.

Figure 2 schematically illustrates an example of Control Plane Location with the two radio protocol stack approach according to an example embodiment of the present disclosure.

With two radio protocol stack approach, APS is always present in all the UEs after powering on, and as shown in Figure 2, it needs to host the control plane functions, which includes different RRC states (e.g., idle mode and connected mode), APS and FPS configurations and so on. On the contrary, with the FPS it is focused on user plane data transfer ONLY. In addition, the FPS need not be active if the bit rate requirements are low enough.

For the FPS operation, in order to facilitate fast processing, some example features which are different from APS:
- Fixed protocol headers
- Simplified RLC (e.g. no RLC retransmissions and no RLC segmentation). This is for example transparent to the network or the network needs to be aware of such operation (i.e., synchronization between the network side and the UE side).

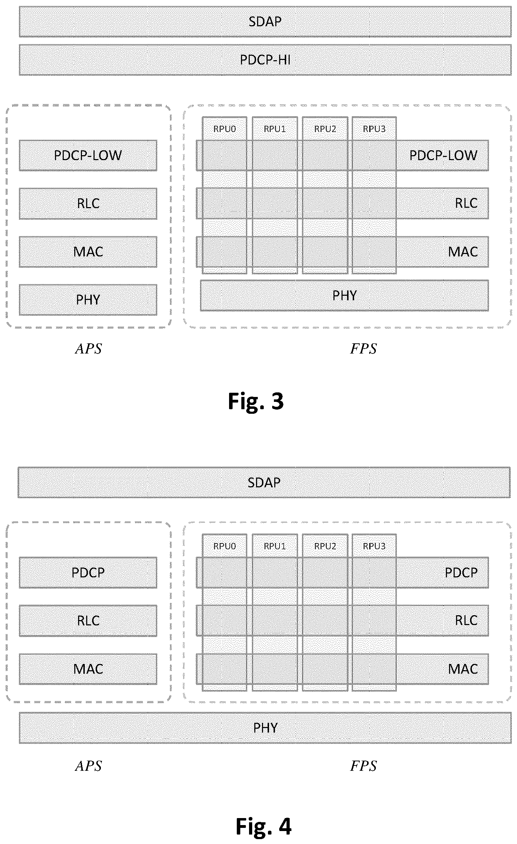

Figure 3 schematically illustrates an example of protocol stack determination at PDCP layer according to an example embodiment of the present disclosure.

In order to support two radio protocol stacks, one essential new function is protocol stack determination. To be more specific, at which protocol layer the decision should be made and related new functions. To maximise the number of tasks that can be executed in parallel, this needs to be located as high up in the radio protocols as possible.

One preferred embodiment would be the higher part of PDCP layer, after sequence number (SN) allocation but before other functions such as security and header compression which are processing heavy. This would allow these other functions to be performed in parallel on each RPU whilst allowing the receiver to re-order the SDUs coming out of the RPUs. This example embodiment is given in Figure 3 where the PDCP layer is assumed to decide which of the APS or FPS to use for a particular service / radio bearer, and the split applies all the way down to the physical layer. Note that this is different from DC where different nodes are used. Here the protocol stacks are typically collocated and are fundamentally different.

For example, once a service/radio bearer is established, PDCP-High (including selected legacy PDCP functions plus new functions) can determine whether the bearer should be routed to APS or FPS:
- When the bearer type is signalling radio bearer (SRB), PDCP-HI will route the data to APS;
- When the bearer type is data radio bearer (DRB) and the data rate is lower than a threshold (for example 800 Mbps, which could be UE capability dependent or configured by a NW), PDCP-HI will route the data to APS;
- Otherwise, when the required data rate is higher than the threshold, PDCP-HI will route the data to FPS. The data rate may be defined in terms of an absolute data rate or via a service type or access class that is associated with a certain data rate or data rate range. For example, a certain access class or service type may be categorically mapped to the APS while another access class or service type may be categorically mapped to the FPS.

In addition to the new routing function at PDCP-HI, additional functions include for example:
- Data splitting, reordering (in case in-order delivery required) and discarding the PDCP PDU to/from different RPUs.
- RPU management for example activation/deactivation.

Figure 4 schematically illustrates an example of protocol stack determination at SDAP layer according to an example embodiment of the present disclosure.

Another example is given in Figure 4 where the SDAP layer is responsible for deciding which stack to use and the split applies up to MAC with a common physical layer below. In this case the new functions related to two protocol stacks as discussed above need to be added in SDAP layer.

Figures 3 and 4 provide merely two examples where the data splitting could take place. Additionally or alternatively, the layer for determining data splitting to APS and FPS is any one of Service Data Adaptation Protocol layer, SDAP layer; Packet Data Convergence Protocol layer, PDCP layer; one or more sub-layers of Packet Data Convergence Protocol layer, PDCP layer; Radio Link Control layer, RLC layer; and Medium Access Control layer, MAC layer.

Further, Figures 1 to 4 show respectively 8 and 4 RPUs configured in the FPS stack, which serves merely illustration purposes and provide examples of RPU arrangement, and therefore does not pose any limitation to the number of RPUs that are to be applied to a specific terminal device in a sepciifc scenario depending for instance on the UE capability and/or the service requirements of supported data rates.

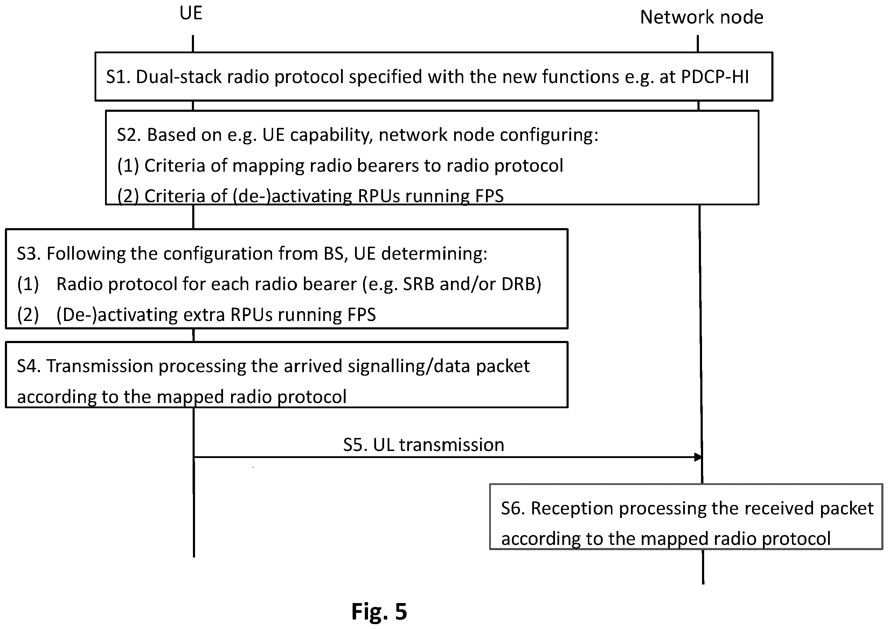

Figure 5 schematically illustrates an example of a signalling diagram according to an example embodiment of the present disclosure.

One example signalling diagram to support dual-stack (APS and FPS) approach is shown in Figure 5 where UL data transmission is taken as an example.

At step S1, the dual-stack radio protocol is specified in 6G standards.

At step S2, based on the UE capability and potential supported applications/services, the network node configures relevant information to the LTE, for example criteria of mapping between radio bearers and radio protocol stacks and/or criteria for (de-)activating RPUs running at FPS.

Once UL data arrival at UE side, based on the configuration, it is handled according to the selected radio protocol stack. Therefore, at step S3, the UE determines the radio protocol stack for each radio bearer (e.g., SRB and/or DRB). Further, the UE may determine whether to activate or de-activate RPUs, for instance based on the data rate required by the service as indicated by the obtained radio bearer. With a lower required data rate, the UE determines to reduce the number of active RPUs and with a higher required data rate, the UE determines to increase the number of active RPUs.

At step S4, the UE processes the arrived signaling/data packet according to the mapped radio protocol stack for transmission.

At step S5, the UE transmits the processed UL data to the network side.

At step S6, similarly proper radio protocol processing is taken at reception side, i.e. at network node considering LTL reception.

Dual-stack protocol configuration in principle comes from the network side as shown in the Figure 5. Further, the operation between UE and network node needs to be synchronized. Depending on the detailed implementation, RPU management could be transparent to the network or standardized approach is needed.

It is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the CU, the DU, etc.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

### List of abbreviations:

- APS: Anchor Protocol Stack
- FPS: Fast Protocol Stack
- MAC: Medium Access Control
- PDCP: Packet Data Convergence Protocol
- RLC: Radio Link Control
- RPU: Radio Processing Unit
- RRC: Radio Resource Control
- SDAP: Service Data Adaptation Protocol
- SRB: Signalling Radio Bearers

## Claims

1. A User Equipment, LTE, comprising:
at least one processor, and
at least one memory storing instructions that, when executed by the at least one processor,
cause the LTE at least to:
provide a radio protocol stack architecture comprising a first radio protocol stack, a second radio protocol stack parallel to the first radio protocol stack, and a first radio protocol layer configured to feed both the first radio protocol stack and the second radio protocol stack;
obtain a radio bearer;
configure the first radio protocol layer with the obtained radio bearer; and
at the first radio protocol layer:
when the obtained radio bearer is a Signaling Radio Bearer, SRB, map the obtained SRB to the first radio protocol stack for processing the obtained SRB;
when the obtained radio bearer is a Data Radio Bearer, DRB, associated with a first data rate, map the obtained DRB to the configured second radio protocol stack for processing the obtained DRB; and
when the obtained radio bearer is a DRB associated with a second data rate smaller than the first data rate, map the obtained DRB to the configured first radio protocol stack for processing the obtained DRB.

2. The LTE according to claim 1, wherein the obtained radio bearer indicates a corresponding service requiring a data rate to be supported by the LTE, and the LTE is further caused to, when the obtained radio bearer is a DRB:
map the obtained DRB to the first radio protocol stack when the required data rate is lower than or equal to a data rate threshold; and
configure the second radio protocol stack parallel to the first radio protocol stack when the required data rate is higher than the data rate threshold and map the obtained DRB to the configured second radio protocol stack.

3. The LTE according to claim 2, wherein the configured second radio protocol stack comprises a pre-determined number of Radio Processing Units, RPUs, configured to process the obtained radio bearer in parallel, and the LTE is further caused to:
adjust the pre-configured number based on the required data rate to be supported by the UE.

4. The LTE according to any one of claims 1 to 3, wherein the LTE is further caused to:
configure the second radio protocol stack parallel to the first radio protocol stack based on capability of the UE.

5. The UE according to any one of claims 1 to 4, wherein:
the first radio protocol stack is configured to host control plane data for both the first radio protocol stack and second radio protocol stack, the control plane data comprising one or more of: information related to Radio Resource Control, RRC, state; configurations related to RRC signaling; and configurations of the first radio protocol stack and the second radio protocol stack, and
the configured second radio protocol stack is configured to host user plane data.

6. The UE according to any one of claims 1 to 5, wherein the second radio protocol stack is configured with fixed protocol headers.

7. The UE according to any one of claims 1 to 6, wherein the first radio protocol layer is any one of: Service Data Adaptation Protocol layer, SDAP layer; Packet Data Convergence Protocol layer, PDCP layer; one or more sub-layers of Packet Data Convergence Protocol layer, PDCP layer; Radio Link Control layer, RLC layer; and Medium Access Control layer, MAC layer.

8. The UE according to any one of claims 1 to 7, wherein:
the radio protocol stack architecture further comprises a second radio protocol layer common to both the first radio protocol stack and the second radio protocol stack and different from the first radio protocol layer;
the first radio protocol stack and the configured second radio protocol stack are configured to feed the second radio protocol layer; and
the second radio protocol layer is preferably any one of: Medium Access Control layer, MAC layer; and Physical layer, PHY layer.

9. The LTE according to any one of claims 1 to 8, wherein the first radio protocol stack and the second radio protocol stack are part of the same radio access technology.

10. A network node, configured to establish a communication to a User Equipment, LTE, for providing a service to the LTE, the network node comprising:
at least one processor, and
at least one memory storing instructions that, when executed by the at least one processor,
cause the network node at least to:
configure the LTE with a radio protocol stack architecture comprising a first radio protocol stack, a second radio protocol stack to be activated by the LTE and a first radio protocol layer, wherein the first radio protocol stack and the second radio protocol stack are parallel to each other and the first radio protocol layer is configured to feed both the first radio protocol stack and the second radio protocol stack; and
configure the UE to, when obtaining a radio bearer related to the provided service at the first radio protocol layer:
when the obtained radio bearer is a Signaling Radio Bearer, SRB, map the SRB to the first radio protocol stack;
when the obtained radio bearer is a Data Radio Bearer, DRB, with a first data rate, activate the second radio protocol stack at the UE and map the DRB to the activated second radio protocol stack; and
when the obtained radio bearer is a DRB associated with a second data rate smaller than the first data rate, map the obtained DRB to the configured first radio protocol stack for processing the obtained DRB.

11. The network node according to claim 10, wherein the service requires a data rate to be supported by the LTE and the network node is further caused to:
determine a data rate threshold based on the UE capability; and
configure the UE to, when the obtained radio bearer is a DRB:
map the obtained DRB related to the provided service to the first radio protocol stack when the required data rate is lower than or equal to the determined data rate threshold; and
activate the second radio protocol stack when the required data rate is higher than the determined data rate threshold and map the obtained DRB related to the provided service to the activated second radio protocol stack.

12. The network node according to claim 11, wherein the network node is further caused to:
configure, for the LTE, the second radio protocol stack with a pre-determined number of Radio Processing Units, RPUs, for processing in parallel the obtained radio bear related to the provided service; and
configure the LTE to adjust the pre-configured number based on the required data rate to be supported by the UE.

13. The network node according to any one of claims 10 to 12, wherein the network node is further caused to:
determine the first protocol layer to be located as being higher than Medium Access Control layer, MAC layer, and preferably as Packet Data Convergence Protocol High, PDCP-HI, layer, more preferably after sequence number, SN, allocation and before functions including security and header compression.

14. A method of a User Equipment, LTE, the method comprising:
providing a radio protocol stack architecture comprising a first radio protocol stack, a second radio protocol stack parallel to the first radio protocol stack, and a first radio protocol layer configured to feed both the first radio protocol stack and the second radio protocol stack;
obtaining a radio bearer;
configuring the first radio protocol layer with the obtained radio bearer; and
at the first radio protocol layer:
when the obtained radio bearer is a Signaling Radio Bearer, SRB, mapping the obtained SRB to the first radio protocol stack for processing the obtained SRB;
when the obtained radio bearer is a Data Radio Bearer, DRB, associated with a first data rate, mapping the obtained DRB to the configured second radio protocol stack for processing the obtained DRB; and
when the obtained radio bearer is a DRB associated with a second data rate smaller than the first data rate, mapping the obtained DRB to the configured first radio protocol stack for processing the obtained DRB.

15. A method of a network node, configured to establish a communication to a User Equipment, LTE, for providing a service to the LTE, the method comprising:
configuring the LTE with a radio protocol stack architecture comprising a first radio protocol stack, a second radio protocol stack to be activated by the UE and a first radio protocol layer, wherein the first radio protocol stack and the second radio protocol stack are parallel to each other and the first radio protocol layer is configured to feed both the first radio protocol stack and the second radio protocol stack; and
configuring the UE to, when obtaining a radio bearer related to the provided service at the first radio protocol layer:
when the obtained radio bearer is a Signaling Radio Bearer, SRB, map the SRB to the first radio protocol stack;
when the obtained radio bearer is a Data Radio Bearer, DRB, with a first data rate, activate the second radio protocol stack at the UE and map the DRB to the activated second radio protocol stack; and
when the obtained radio bearer is a DRB associated with a second data rate smaller than the first data rate, map the obtained DRB to the configured first radio protocol stack for processing the obtained DRB.
